# EUROPEAN PATENT APPLICATION

(11) **EP 4 797 053 A1**
(43) Date of publication of application: **26.08.2026**
(21) Application number: 25159087.3
(22) Date of filing: 20.02.2025
(51) Int. Cl.: G06F 3/01, G06V 20/56

(54) **PROVIDING DATA REGARDING AN ENVIRONMENT OF A VEHICLE FOR USE BY AN EXTENDED REALITY SOFTWARE APPLICATION**

(71) Applicant: Valeo Comfort and Driving Assistance, 94000 Créteil (FR)
(72) Inventor: Didier, Raphael, 94000 Creteil (FR)
(74) Representative: Jauregui Urbahn, Kristian

(57) **Abstract**

In a computer-implemented method for providing data regarding an environment of a vehicle (1) for use by an extended reality software application, a pre-computing module (5) receives environmental sensor data (10) representing the environment directly or indirectly from an environmental sensor system (7) of the vehicle (1) and, depending on the environmental sensor data (10), assigns at least one class of at least one set of predefined classes to a current scene in the environment. The pre-computing module (5) provides at least one data package to an application module (6) for running the extended reality software application depending on the at least one data package. The at least one data package comprises at least a part of the environmental sensor data (10) or modified environmental sensor data (10) depending on the environmental sensor data (10) and the at least one class assigned to the current scene.

## Description

The present invention is directed to a computer-implemented method for providing data regarding an environment of a vehicle for use by an extended reality software application, wherein environmental sensor data representing the environment is received directly or indirectly from a camera system of the vehicle. The present invention is further directed to a computer-implemented method for carrying out an extended reality software application in a vehicle, wherein such a computer-implemented method for providing data regarding an environment of the vehicle is carried out and to a data processing system for carrying out said computer-implemented methods.

In the context of in-vehicle extended reality, XR, software applications, for example XR gaming, especially in augmented reality, AR, software applications, virtual elements are superimposed on a video of the vehicle's environment.

In order to create the virtual elements, in particular with a high level of realism and integration in the physical environment, an application module for carrying out the XR software application may have to perform extensive computations on a regular basis to keep the influence of the physical environment on the execution of the XR software application consistent. Since carrying out other necessary computational tasks to carry out the XR software application may also be computationally expensive, the application module may be pushed towards its performance limits.

It is an objective of the present invention to reduce the computational effort for an application module for carrying out the XR software application based on environmental sensor data from an environmental sensor system of a vehicle.

This objective is achieved by the respective subject matter of the independent claim. Further embodiments and preferred implementations are subject matter of the dependent claims.

The invention is based on the idea to classify a current scene in the environment by using a pre-computing module and to transmit the environmental sensor data or a part of it together with the assigned class or classes to the application module to carry out the XR software application.

According to an aspect of the invention, a computer-implemented method for providing data regarding an environment of a vehicle for use by an extended reality, XR, software application is provided. Therein, a pre-computing module receives environmental sensor data depicting the environment directly or indirectly from a camera system of the vehicle and, depending on the environmental sensor data, assigns at least one class of at least one set of predefined classes to a current scene in the environment. The pre-computing module provides at least one data package to an application module for running the extended reality software application depending on the at least one data package. The at least one data package comprises at least a part of the environmental sensor data or modified environmental sensor data depending on the environmental sensor data. That at least one data package further comprises the at least one class assigned to the current scene.

Unless stated otherwise, all steps of the computer-implemented method may be performed by a data processing system, which comprises at least one data processing device, in particular a data processing system of the vehicle. In particular, the at least one data processing device is configured or adapted to perform the steps of the computer-implemented method. For this purpose, the at least one data processing device may for example store a computer program comprising instructions which, when executed by the at least one data processing device, cause the at least one data processing device to carry out the computer-implemented method. The terms "data processing system" and "at least one data processing device" may be used interchangeably.

All data processing devices of the at least one data processing device may be comprised by the vehicle. However, it is also possible that all data processing devices of the at least one data processing device are part of an external computing system external to the vehicle, for example a mobile electronic device, a backend server or a cloud computing system. It is also possible that the at least one data processing device comprises at least one vehicle data processing device of the vehicle as well as at least one external data processing device comprised by the external computing system. The at least one vehicle data processing device may for example be comprised by one or more electronic control units, ECUs, and/or one or more zone control units, ZCUs, and/or one or more domain control units, DCUs, of the vehicle and/or by the camera system.

In case the at least one data processing device comprises two or more data processing devices, certain steps carried out by the at least one data processing device may be understood such that different data processing devices carry out different steps or different parts of a step. In particular, it is not required that each data processing device carries out the steps completely. In other words, carrying out the steps may be distributed amongst the two or more data processing devices.

In particular, the pre-computing module and the application module are different software modules, which may be implemented on different data processing devices of the data processing system.

From each implementation of the computer-implemented method, a respective implementation of a method, which is not purely computer-implemented, is obtained by including respective steps of generating the environmental sensor data, in particular by the environmental sensor system.

The XR software application may for example be understood as a software application, whose execution includes controlling a display device to display extended content comprising real content and virtual content, for example in a visual overlay representation. The real content comprises or is generated based on the environmental sensor data or the part of the environmental sensor data or the modified environmental sensor data transmitted via the at least one data package. The virtual content is determined at least also depending on the at least one class assigned to the current scene. The XR software application may for example be an XR game software application.

That the pre-computing module receives the environmental sensor data indirectly from the environmental sensor system may for example be understood such that the pre-computing module receives the environmental sensor data from a storage device or a data buffer.

In order to assign there at least one class to the current scene, the pre-computing module may carry out one or more classifications, wherein each classification involves assigning a class of a predefined subset of the at least one set of predefined classes to the current scene. In other words, the set of predefined classes comprises or consists of one or more sets regarding different aspects of a potential scene in the environment of the vehicle. The at least one class comprises N classes, wherein N is equal to the total number of sets.

It is noted that the one or more classifications are not necessarily carried out only based on the environmental sensor data. In some embodiments, it is possible that the one or more classifications are carried out depending on further information including for example a digital map of a geographical region comprising the environment of the vehicle, GNSS data from a GNSS receiver of the vehicle, for example a GPS receiver, status data of the vehicle such as a current speed and/or steering angle, and/or general information regarding the environment such as information regarding the weather, the daytime et cetera.

For example, an environmental sensor system can be understood as a sensor system, which is able to generate sensor data or sensor signals, which depict, represent or image an environment of the environmental sensor system. In particular, the ability to capture or detect electromagnetic or other signals from the environment, cannot be considered a sufficient condition for qualifying a sensor system as an environmental sensor system. For example, cameras, in particular cameras operating in the visible range or cameras operating in the infrared range, lidar systems, radar systems or ultrasonic sensor systems may be considered as environmental sensor systems. An environmental sensor system may also comprise a combination of two or more such systems.

The sensor data may therefore comprise, for example, one or more camera images, video streams, thermal images, lidar point clouds, lidar depth images, radar data, ultrasonic data and/or respective images generated based on the radar data or ultrasonic data, according to the implementation of the environmental sensor system.

The one or more classifications may be carried out by using classification algorithms or processes, which are known per se. Such classification algorithms or processes may include, in particular, algorithms or processes based on a trained machine learning model, MLM.

A trained MLM can be understood as an algorithm, in particular a computer-implemented algorithm, which can reproduce functions that are possible through human intellectual performance concretely or in a broader sense. A trained MLM can also be referred to as a "trained function", for example.

When training an MLM, parameters of the MLM are generally adjusted or updated. The training may be supervised, semi-supervised or unsupervised. The training may also include reinforcement learning or representation learning and/or other known training methods. In particular, the parameters of the MLM can be adapted iteratively over several training steps. In particular, a predefined loss function can be minimized for training. If the MLM is an artificial neural network, ANN, a backpropagation algorithm can be used to adjust the parameters.

In particular, an MLM may include an ANN, a support vector machine, a k-means clustering algorithm, a decision tree, and so on. In particular, an ANN may be or include a deep neural network and/or a convolutional neural network, CNN, in particular a deep CNN, and/or a recurrent neural network, RNN, in particular a recurrent CNN, and/or a transformer network and/or a generative adversarial network, GAN.

According to the invention, the one or more classifications are for example carried out before the respective part of the environmental sensor data representing the current scene is processed by the application module, which may also be denoted as XR software application module or XR game software module in respective embodiments. Consequently, the application module is not required to periodically analyze and classify the environment based on the environmental sensor data. Therefore, computational resources available to the application module can be used for other tasks or the data processing device implementing the application module may need less computational resources to carry out the XR software application.

According to several embodiments, the pre-computing module assigns at least one class of the at least one set of predefined classes to an expected forthcoming scene in the environment depending on the environmental sensor data. The at least one data package comprises the at least one class assigned to the expected forthcoming scene.

In other words, the pre-computing module carries out the one more classifications not only for the current scene but also for the expected forthcoming scene. The computational effort for the application module is therefore further reduced. Furthermore, the application module may use the at least one class assigned to the expected forthcoming scene at an early time.

It is noted that the one or more classifications for the expected forthcoming scene are not necessarily carried out only based on the environmental sensor data. In some embodiments, it is possible that the one or more classifications are carried out depending on further information as described above for the one or more classifications for the current scene.

According to several embodiments, the pre-computing module assigns at least one class of the at least one set of predefined classes to an expected forthcoming scene in the environment depending on a digital map of a geographical region and a current position of the vehicle according to the digital map.

According to several embodiments, the pre-computing module determines a probability score for the class assigned to the expected forthcoming scene in the environment depending on the environmental sensor data and/or depending on the digital map and the current position of the vehicle according to the digital map. The at least one data package comprises the probability score.

According to several embodiments, the pre-computing module assigns the at least one class of the at least one set of predefined classes to the current scene depending on a digital map of a geographical region and a current position of the vehicle according to the digital map.

According to several embodiments, a classification for the expected forthcoming scene may also include computing a respective probability score for the corresponding class to happen. This may be done for each of the one or more classifications or only for a subset of them.

According to several embodiments, the pre-computing module assigns the at least one class of the at least one set of predefined classes to the expected forthcoming scene in the environment also depending on a digital map of a geographical region, in particular a geographical region which comprises a current position of the vehicle or an expected forthcoming position of the vehicle, and depending on the current position of the vehicle according to the digital map.

In this way, a more reliable prediction of the forthcoming expected scene and the corresponding at least one class is achieved. In particular, the digital map may contain information about the type of scene to be expected. The pre-computing module may therefore evaluate, based on the digital map and the current position of the vehicle, where the vehicle is currently located, where it will probably be located after some time, and what kind of environment is present there according to the digital map. The pre-computing module may assign the at least one class to the expected forthcoming scene also depending on this information. The pre-computing module may receive the GNSS data from the GNSS receiver of the vehicle and determine the current position of the vehicle based on the GNSS data.

According to several embodiments, the pre-computing module assigns the at least one class of the at least one set of predefined classes to the expected forthcoming scene in the environment depending on a planned route for the vehicle, for example depending on the planned route and the digital map.

In this way, a more reliable prediction of the forthcoming expected scene and the corresponding at least one class is achieved. The pre-computing module may receive the current route for the vehicle, for example from a navigational system.

For example, the digital map may be a road map, where road segments are pre-classified accordingly.

According to several embodiments, the assigning of the at least one class to the current scene comprises assigning a road type of a road the vehicle is currently located on to the current scene.

In other words, at least one set of predefined classes comprises a set of road type classes and the pre-computing module assigns one of the road type classes to the current scene. Depending on the XR software application, the road type may be of particular relevance for carrying out the XR software application. Furthermore, the road type may be determined based on the environmental sensor data in a very reliable manner before this information is actually used by the XR software application in many cases, at least for a specific predefined period of time. It is therefore avoided that the application module has to repeatedly determine the road class itself.

According to several embodiments, the assigning of the at least one class to the expected forthcoming scene comprises assigning a road type of a road the vehicle is expected to be located.

The explanations regarding the current scene carry over analogously.

According to several embodiments, the assigning of the at least one class to the current scene comprises assigning a road and/or traffic condition to the current scene.

In other words, at least one set of predefined classes comprises a set of road condition classes and/or a set of traffic condition classes and the pre-computing module assigns one of the road condition classes and/or one of the traffic condition classes to the current scene. Depending on the XR software application, the road and/or traffic condition may be of particular relevance for carrying out the XR software application. Furthermore, the road and/or traffic condition may be determined based on the environmental sensor data in a very reliable manner before this information is actually used by the XR software application in many cases, at least for a specific predefined period of time. It is therefore avoided that the application module has to repeatedly determine the road condition class and/or the traffic condition class itself.

According to several embodiments, the assigning of the at least one class to the expected forthcoming scene comprises assigning a road and/or traffic condition to the expected forthcoming scene.

The explanations regarding the current scene carry over analogously.

According to several embodiments, the assigning of the at least one class to the current scene comprises assigning a weather condition to the current scene.

In other words, at least one set of predefined classes comprises a set of weather condition classes and the pre-computing module assigns one of the weather condition classes to the current scene. Depending on the XR software application, the weather condition may be of particular relevance for carrying out the XR software application. Furthermore, the weather condition may be determined based on the environmental sensor data in a very reliable manner before this information is actually used by the XR software application in many cases, at least for a specific predefined period of time. It is therefore avoided that the application module has to repeatedly determine the weather condition class itself.

According to several embodiments, the assigning of the at least one class to the expected forthcoming scene comprises assigning a weather condition to the expected forthcoming scene.

The explanations regarding the current scene carry over analogously.

According to several embodiments, the pre-computing module generates a three-dimensional environment model depending on the environmental sensor data and the at least one data package comprises the environment model at least in part.

The environment model may for example comprise depth information regarding the environment, for example of the road and/or one or more further objects in the environment, for example a depth map. The environment model may for example comprise a course of the road, a course of one or more lanes of the road, object positions of the one or more further objects, and/or a semantic segmentation map of the environment.

The environment model may be generated by using algorithms or processes, which are known per se. Such algorithms or processes may include, in particular, algorithms or processes based on a trained machine learning model.

The environment model may be of significant relevance for carrying out the XR software application. In such embodiments, it is avoided that the application module itself has to generate the environment model.

According to several embodiments, the pre-computing module receives status data of the vehicle and the at least one data package comprises the status data.

The pre-computing module may receive the status data from one or more sensors or ECUs or memory devices of the vehicle. The status data may for example comprise the current position of the vehicle, a current driving speed of the vehicle, a current acceleration of the vehicle, a current orientation of the vehicle in the environment, et cetera.

According to several embodiments, the pre-computing module assigns the at least one class of the at least one set of predefined classes to the current scene also depending on the digital map of a geographical region and the current position of the vehicle according to the digital map.

Consequently, the one or more classifications for the current scene may be carried out with improved reliability. In particular, the digital map may contain information about the type of the current scene.

According to several embodiments, the pre-computing module is implemented in a first data processing device of the data processing system and the application module is implemented in a second data processing device of the data processing system, which is physically separated from the first data processing device.

In such embodiments, the invention is particularly beneficial since the computation of at least one class assigned to the current scene and, in respective embodiments, the at least one class assigned to the expected forthcoming scene, is completely separated from the second data processing device. Consequently, the flexibility to use different types of second data processing devices is increased since a significant part of the computational effort is handled by the first data processing device.

For example, the first data processing device may be a vehicle data processing device of the vehicle, for example an ECU of the vehicle. For example, the second data processing device may be a mobile electronic device, which not a part of the vehicle.

According to several embodiments, the pre-computing module provides the at least one data package to the application module by wireless communication.

According to several embodiments the pre-computing module and the application module are implemented in a single data processing device.

According to several embodiments, the environmental sensor data comprises a video stream, which is received directly or indirectly from a camera system of the environmental sensor system, and/or a camera image, which is received directly or indirectly from the camera system of the environmental sensor system, and/or lidar data, which is received directly or indirectly from a lidar sensor system of the environmental sensor system, and/or radar data, which is received directly or indirectly from a radar system of the environmental sensor system, and/or ultrasonic sensor data, which is received directly or indirectly from an ultrasonic sensor system of the environmental sensor system.

According to a further aspect of the invention, a computer-implemented method for carrying out an XR software application, in particular in a vehicle, is provided. Therein, a computer-implemented method for providing data regarding an environment of the vehicle according they invention is carried out and the XR software application is carried out by the application module depending on the at least one data package.

For example, carrying out the XR software application comprises controlling a display device, in particular of the data processing system, for example of the second data processing device, to display extended content comprising real content and virtual content. The real content is determined, in particular by the application module, depending on the environmental sensor data or the part of the environmental sensor data transmitted via the at least one data package or the modified environmental sensor data transmitted via the at least one data package. The virtual content is determined, in particular by the application module, depending on the at least one class assigned to the current scene transmitted via the at least one data package. For example, that extended content may be displayed as an overlay of the real content and the virtual content.

According to a further aspect of the invention, a data processing system is provided. The data processing system is configured to carry out a computer-implemented method according to the invention.

In particular, the pre-computing module is implemented in the data processing system. In some embodiments, the application module is also implemented in the data processing system.

The terms "data processing system" and "at least one data processing device" may be used interchangeably in the present disclosure. In the present disclosure, a data processing device, also denoted as computing device, may for example be understood as a device with processing circuitry for processing data. A data processing device can therefore perform computing operations in order to process data. An indexed access to a data structure, for example a look-up table, LUT, or a database may also be considered as a computing operation. Data processing that is partially or fully implemented in hardware can also be considered a computing operation.

In particular, a data processing device may include one or more computers, one or more microcontrollers, and/or one or more integrated circuits, for example, one or more application-specific integrated circuits, ASIC, one or more field-programmable gate arrays, FPGA, and/or one or more systems-on-a-chip, SoC. A data processing device may also include one or more processors, for example one or more microprocessors, one or more central processing units, CPU, one or more graphics processing units, GPU, and/or one or more signal processors, in particular one or more digital signal processors, DSP. The data processing device may also include a physical or a virtual cluster of computers or other of said devices.

A data processing device may also comprise one or more hardware and/or software interfaces, for example for receiving and/or providing data, respectively.

A data processing device may also comprise one or more memory devices. Therein, a memory device may be implemented as a volatile memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to several embodiments, the data processing system comprises the first data processing device, wherein the pre-computing module is implemented in the first data processing device.

According to several embodiments, the data processing system comprises a second data processing device, wherein the application module is implemented in the second data processing device.

According to several embodiments, the second data processing device and the first data processing device are physically separated from each other.

According to several embodiments, the first data processing device comprises an electronic control unit of the vehicle or a vehicle computer of the vehicle.

According to several embodiments the second data processing device comprises a mobile electronic device, for example a smartphone or a tablet computer or a notebook computer or a head mounted device.

According to several embodiments, the mobile electronic device comprises the display device.

Further embodiments of the data processing system according to the invention follow directly from the various embodiments of the computer-implemented methods according to the invention and vice versa. In particular, individual features and corresponding explanations as well as advantages relating to the various embodiments of the computer-implemented methods according to the invention can be transferred analogously to corresponding embodiments of the data processing system according to the invention.

According to a further aspect of the invention, a system is provided, which comprises a data processing system according to the invention. The system further comprises the camera system for the vehicle and/or the display device.

According to a further aspect of the invention, a computer program comprising instructions, which, when executed by a data processing system, for example by a first data processing device of a data processing system according to the invention, cause the data processing system to carry out a computer-implemented method for providing data regarding an environment of a vehicle according to the invention.

According to a further aspect of the invention, a computer program comprising instructions, which, when executed by a data processing system, cause the data processing system to carry out a computer-implemented method for providing data regarding an environment of a vehicle and/or a computer-implemented method for carrying out an XR software application according to the invention.

The instructions may be provided as respective program code, for example. The program code can for example be provided as binary code or assembler and/or as source code of a programming language, for example C, and/or as program script, for example Python.

According to a further aspect of the invention, a further computer program comprising first instructions and second instructions is provided. When the first instructions are executed by a first data processing device, they cause the first data processing device to carry out a computer-implemented method for providing data regarding an environment of a vehicle according to the invention. When the second instructions are executed by a second data processing device, they cause the second data processing device to carry out the XR software application depending on the at least one data package.

The first instructions and/or the second instructions may be provided as respective program code, for example. The program code can for example be provided as binary code or assembler and/or as source code of a programming language, for example C, and/or as program script, for example Python.

According to a further aspect of the invention, a computer-readable storage medium storing a computer program according to the invention and/or a further computer program according to the invention is provided.

The computer program, the further computer program and the computer-readable storage medium are respective computer program products comprising the instructions and/or the first instructions and/or the second instructions, respectively.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- Fig. 1: shows schematically a vehicle and an exemplary embodiment of a data processing system according to the invention;
- Fig. 2: shows schematically a vehicle and a further exemplary embodiment of a data processing system according to the invention;
- Fig. 3: shows schematically a vehicle and a further exemplary embodiment of a data processing system according to the invention;
- Fig. 4: shows aspects of an exemplary embodiment of a computer-implemented method for carrying out an extended reality software application according to the invention;
- Fig. 5: shows aspects of a further exemplary embodiment of a computer-implemented method for carrying out an extended reality software application according to the invention; and
- Fig. 6: shows a schematic flow diagram of an exemplary embodiment of a computer-implemented method for providing data regarding an environment of a vehicle according to the invention.

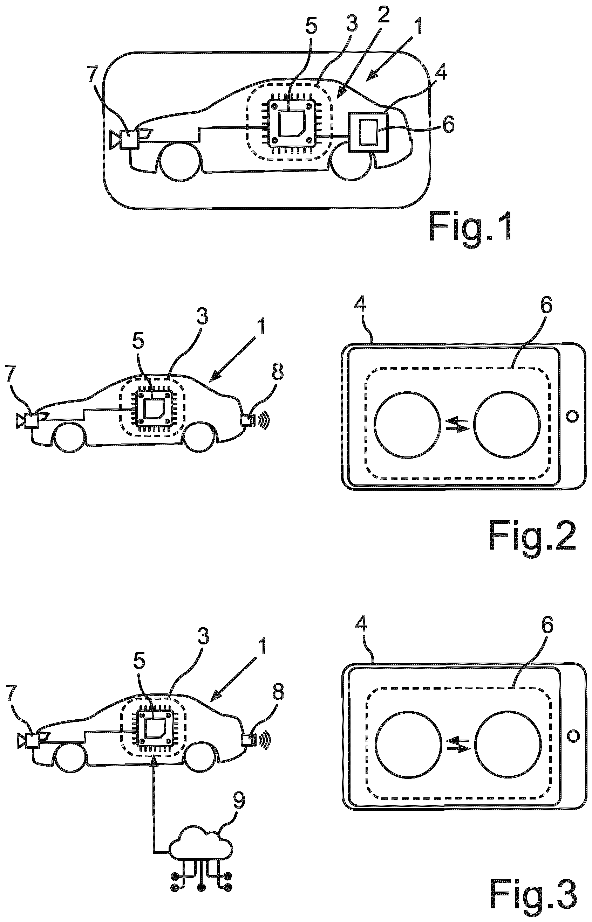

Fig. 1 shows schematically a vehicle 1 and an exemplary embodiment of a data processing system 2 according to the invention. The data processing system 2 is configured to carry out a computer-implemented method according to the invention for providing data regarding an environment of the vehicle 1 for use by an extended reality software application.

A pre-computing module 5, which is implemented in a first data processing device 3 of the data processing system 2, for example an ECU of the vehicle 1, receives a video stream 10 depicting the environment directly or indirectly from a camera system 7 of the vehicle 1. Depending on the video stream 10, the pre-computing module 5 assigns at least one class of at least one set of predefined classes to a current scene in the environment. The pre-computing module 5 provides at least one data package to an application module 6 for running the extended reality software application depending on the at least one data package. The at least one data package comprises at least a part of the video stream 10 or a modified video stream 10 depending on the video stream 10 and the at least one class assigned to the current scene.

It is noted that, instead of or in addition to the video stream 10, further environmental sensor data received from another environmental sensor system of the vehicle 1 may be used in an analog manner as described for the video stream 10 here and in the following.

The transmission of the at least one data packet from the pre-computing module 5 to the application module 6 may be carried out by wire-based or wireless communication.

In some embodiments, the pre-computing module 5 also assigns at least one class of the at least one set of predefined classes to an expected forthcoming scene in the environment depending on the video stream 10. The at least one data package comprises the at least one class assigned to the expected forthcoming scene.

The XR software application may be carried out depending on the at least one data package by the application module 6 depending on the at least one data package. The application module 6 is implemented in a second data processing device 4. The second data processing device 4 is not necessarily part of the data processing system 2. However, in case the second data processing device 4 is part of the data processing system 2, the data processing system 2 is able to carry out a computer-implemented method for carrying out an XR software application according to the invention.

The second data processing device 4 may be comprised by the vehicle 1 as well. It may for example be a part of the same ECU as the first data processing device 3 or part of another ECU of the vehicle 1.

It is also possible, however, that the second data processing device 4 is not comprised by the vehicle 1. Fig. 2 shows schematically a vehicle 1 and a further exemplary embodiment of a data processing system 2 according to the invention, which is based on the data processing system 2 of Fig. 1, but wherein the second data processing device 4 is not comprised by the vehicle 1. The second data processing device 4 may for example be a mobile electronic device such as a tablet computer.

In particular, the vehicle 1 comprises a communication interface 8 for wireless communication and the second data processing device 4 comprises a further communication interface for wireless communication. Consequently, the pre-computing module 5 may transmit the at least one data packet in a wireless manner via the communication interface 8 and the further communication interface to the application module 6.

Fig. 2 shows schematically a vehicle 1 and a further exemplary embodiment of a data processing system 2 according to the invention, which is based on the data processing system 2 of Fig. 1 or Fig. 2. In particular, the second data processing device 4 may be part of the vehicle 1 as described with respect to Fig. 1 or may be provided separately as described with respect to Fig. 2.

In the embodiment of Fig. 3, the pre-computing module 5 is adapted to receive further information via an application programming interface, API, 9 for example from other components of the vehicle 1 and/or from a backend server, et cetera. The pre-computing module 5 may assign the at least one class to the current scene in the environment depending also on the further information and/or the at least one data packet may comprise the further information or parts of it.

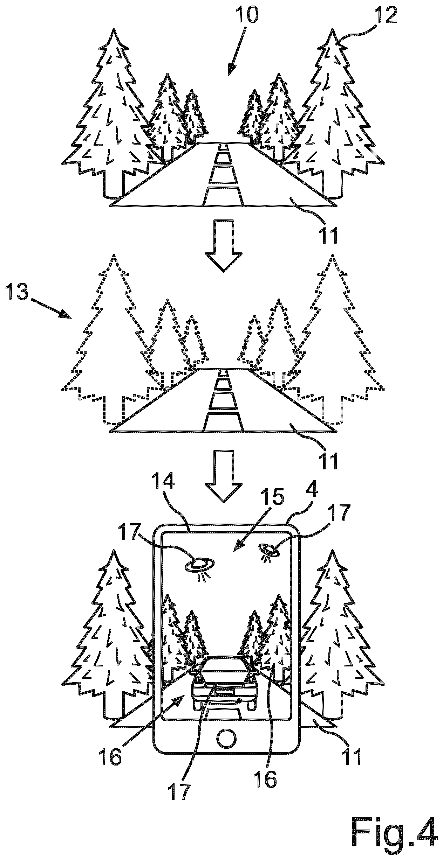

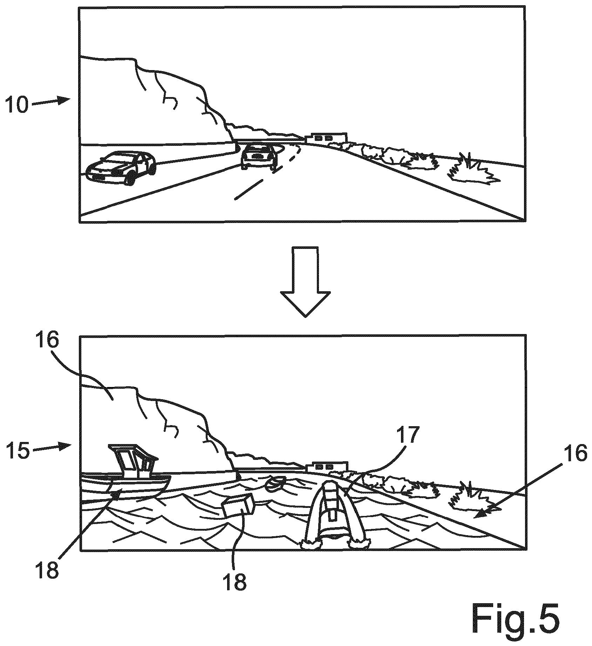

In some embodiments, for example the embodiments of Fig. 1 to Fig. 3, carrying out the XR software application comprises controlling a display device 14 to display extended content 15, as shown in the bottom picture of Fig. 4 and in the bottom picture of Fig. 5. In the top pictures of Fig. 4 and Fig. 5, the underlying video stream 10 is shown, such as trees 12 along the road 11 in the top picture of Fig. 4. The extended content 15 comprises real content 16, which is determined depending on at least the part of the video stream 10 or the modified video stream transmitted via the at least one data package, and virtual content 17, 18.

In some embodiments, the pre-computing module 5 generates a three-dimensional environment model 13 depending on the video stream 10, as shown schematically in the middle picture of Fig. 4. The at least one data package comprises the environment model 13 at least in part.

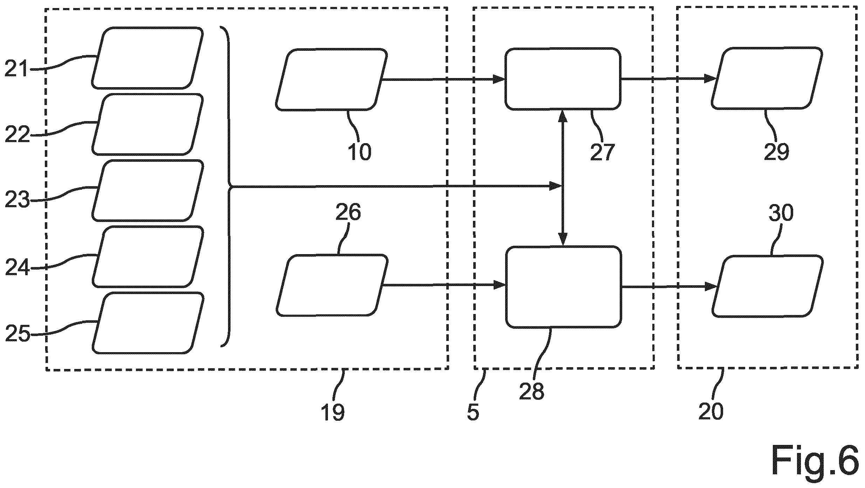

Fig. 6 shows a schematic flow diagram of an exemplary embodiment of a computer-implemented method for providing data regarding an environment of a vehicle 1 according to the invention, which is based on the computer-implemented method as described with respect to Fig. 1.

Fig. 6, input data 19 is received and processed by the pre-computing module 5 to generate output data 20, which may be part of the at least one data package provided to the application module 6.

The input data 19 includes for example the video stream 10 and/or further environmental sensor data 21 and/or intrinsic vehicle status data 22 and/or the current position 23 of the vehicle 1 according to the digital map 24, for example a road map with pre-classified road segments, and/or further information 25, which may for example be gathered from external services, such as weather forecast information, traffic information, timing schemes of traffic light, et cetera, and/or a planned route 26 for the vehicle 1.

The pre-computing module 5 may for example in processing step 27 determine the class 29 of the current scene, for example whether it is a sea-side scene, a city road scene, a traffic jam scene, a sunny scene, et cetera. In some embodiments, the pre-computing module 5 may for example assign in processing step 28 a class 30 of at least one set of predefined classes to an expected forthcoming scene in the environment and, optionally, a respective probability score for the corresponding class. It is also possible that the pre-computing module 5 assigns two or more classes of at least one set of predefined classes to the expected forthcoming scene and determine the respective probability score for each of the corresponding classes.

As described, in particular with reference to the figures, the invention allows to reduce the computational effort for an application module for carrying out the XR software application based on a video stream from a camera system of a vehicle.

The video stream may be any type of view from the vehicle's cameras including a front camera, a back camera, and/or a side camera. The video stream may also be preprocessed, for example to generate a 360° bowl view, a panoramic view, a surround view, et cetera.

In some embodiments, a tablet computer or another mobile electronic device with a display, with computing power and user interaction capabilities, for example a smartphone or a display integrated in the vehicle, is connected to the vehicle, and in particular to the pre-computing module. Thanks to respective packages and libraries, an XR software application module, for example an XR game software, can receive and exploit a stream of data from the pre-computing module that is composed of the video stream, a reconstructed 3D environment model and a number of further data from the vehicle. The application module may then for example propose to the user a gaming experience where virtual items are added to the real environment video stream and where virtual and real interact together.

In order to create the gaming elements, including but not limited to items, stakes, goals, story, et cetera, by using the live real world and processed 3D data, the application module may need more information than the video stream and, if available, the environment model. In particular, for realism and a great integration in the real environment, it may need more environmental information out of the field of view, like the type of landscape, region, et cetera. It may also need to know the probability of an event in order to decide whether or not to use that event as a trigger for a game event, for instance the probability of having trees along the road. To do this, the application module could in principle gather additional data from the internet based on the GPS location provided by the pre-computing module, then analyze and compute that data to infer the desired information. This may take up a lot of computing power and connection bandwidth and ultimately time and energy to provide a smooth and long gaming experience.

Therefore, in several embodiments of the present invention, the pre-computing module provides to the application module pre-classified and pre-computed metadata that spares the need for the expensive computing at any given time.

In some embodiments, this may be considered as a process that consists of two steps. First, a new layer of interpreted data is created and a specific classification is made to be used for carrying out the XR game. This includes, for example, types of roads, which may also depend on data that are not immediately available from the camera feed, like "city street with parked vehicles", "motorway interchange", "merging and exit lanes", "seaside road", "mountain road", et cetera. This may also include particular road situations, which otherwise could only be defined through image computing, like "traffic jam", "roundabout", "tollgate", "bad visibility due to rain", "construction works", et cetera. This may also include environmental context like "percentage of cloud covering", "non corrected light level", et cetera. Second, these new data and parameters are pre-computing for the current scene and, optionally, a probability for the following scene may also be determined by the pre-computing module and provided to the application module continuously or repeatedly for the application module to focus its computing power to the sole task of creating the best possible gaming experience.

In other words, a vocabulary and/or classification of data is defined and then pre-computed before sending the necessary data including the video stream and, for example the environment model to the application module. Finally, the development of the XR software application is simplified, less power is used by the application module, and/or the XR application software may be linked better with the real environment.

In one exemplary use case, a user starts driving and the traffic is fluid. The pre-computing module pre-computes that they drive on a 2x2 lanes road with an average speed of around 130 km/h with a relative proximity to the sea and provides the application module with the "highway" and "seaside" types. The application module may therefore offer a gameplay according to this situation. For example, asphalt may be turned into virtual water, a virtual boat controlled by the player may be moved from left to right, other vehicles on the opposite lanes may be detected and turned into enemies, vehicles on the same lane may also be detected but cooperate with the player, virtual elements such as bonuses, power-ups and obstacles may be added to the environment, and so forth.

After a while the user approaches a city and the pre-computing module informs the application module that the type will soon turn to "city street" "with frequently parked cars" and "no potential trees" with 100% probability within 1km, and the application module may prepare a mode that adapts interaction to intense traffic, stopped obstacles and lower speed by launching a transition sequence, for example. In the city, the pre-computing module may receive information of a traffic jam ahead and inform the application accordingly before the user gets stuck in the traffic jam. The application module may seamlessly transition to a different gameplay that is playable while the vehicle is static or moving slow. As the vehicle is slowing down and average speed is below 10 km/h, and the road is cluttered with vehicles stuck in traffic, the player may use vehicles as platform to reach bonuses and power-ups that will serve their game character when back in fluid conditions.

## Claims

1. Computer-implemented method for providing data regarding an environment of a vehicle (1) for use by an extended reality software application, wherein
- a pre-computing module (5) receives a environmental sensor data (10) representing the environment directly or indirectly from an environmental sensor system (7) of the vehicle (1) and, depending on the environmental sensor data (10), assigns at least one class of at least one set of predefined classes to a current scene in the environment;
- the pre-computing module (5) provides at least one data package to an application module (6) for running the extended reality software application depending on the at least one data package;
- the at least one data package comprises at least a part of the environmental sensor data (10) or modified environmental sensor data (10) depending on the environmental sensor data (10) and the at least one class assigned to the current scene.

2. Computer-implemented method according to claim 1, wherein
- the pre-computing module (5) assigns at least one class of the at least one set of predefined classes to an expected forthcoming scene in the environment depending on the environmental sensor data (10) and/or depending on a digital map of a geographical region and a current position of the vehicle (1) according to the digital map; and
- the at least one data package comprises the at least one class assigned to the expected forthcoming scene.

3. Computer-implemented method according to claim 2, wherein the pre-computing module (5) assigns the at least one class of the at least one set of predefined classes to the expected forthcoming scene in the environment depending on a planned route for the vehicle (1).

4. Computer-implemented method according to one of the preceding claims, wherein the assigning of the at least one class to the current scene comprises assigning a road type of a road the vehicle (1) is currently located on to the current scene.

5. Computer-implemented method according to one of the preceding claims, wherein the assigning of the at least one class to the current scene comprises assigning a road and/or traffic condition to the current scene.

6. Computer-implemented method according to one of the preceding claims, wherein the assigning of the at least one class to the current scene comprises assigning a weather condition to the current scene.

7. Computer-implemented method according to one of the preceding claims, wherein
- the pre-computing module (5) generates a three-dimensional environment model (13) depending on the environmental sensor data (10); and
- the at least one data package comprises the environment model (13) at least in part.

8. Computer-implemented method according to one of the preceding claims, wherein the pre-computing module (5) receives status data of the vehicle (1) and the at least one data package comprises the status data.

9. Computer-implemented method according to claim 8, wherein the status data comprises a position of the vehicle (1) and/or a driving speed of the vehicle (1) and/or a steering status of the vehicle (1) and/or an acceleration of the vehicle (1) and/or an orientation of the vehicle (1).

10. Computer-implemented method according to one of the preceding claims, wherein the pre-computing module (5) assigns the at least one class of the at least one set of predefined classes to the current scene depending on a digital map of a geographical region and a current position of the vehicle (1) according to the digital map.

11. Computer-implemented method according to one of the preceding claims, wherein the pre-computing module (5) receives status data of the vehicle (1) and the pre-computing module (5) assigns the at least one class of the at least one set of predefined classes to the current scene depending on the status data.

12. Computer-implemented method according to one of the preceding claims, wherein
- the pre-computing module (5) is implemented in a first data processing device (3) and the application module (6) is implemented in a second data processing device (4), which is physically separated from the first data processing device (3), and/or the pre-computing module (5) provides the at least one data package to the application module (6) by wireless communication; or
- the pre-computing module (5) and the application module (6) are implemented in a single data processing device.

13. Computer-implemented method according to one of the preceding claims, wherein the environmental sensor data (10) comprises
- a video stream (10), which is received directly or indirectly from a camera system (7) of the environmental sensor system (7); and/or
- a camera image, which is received directly or indirectly from the camera system (7) of the environmental sensor system (7); and/or
- lidar data, which is received directly or indirectly from a lidar sensor system of the environmental sensor system (7); and/or
- radar data, which is received directly or indirectly from a radar system of the environmental sensor system (7); and/or
- ultrasonic sensor data, which is received directly or indirectly from an ultrasonic sensor system of the environmental sensor system (7).

14. Computer-implemented method for carrying out an extended reality software application, wherein a computer-implemented method for providing data regarding an environment of the vehicle (1) according to one of the preceding claims is carried out and the extended reality software application is carried out by the application module (6) depending on the at least one data package.

15. Computer-implemented method according to claim 14, wherein carrying out the extended reality software application comprises controlling a display device (14) to display extended content (15) comprising real content (16), which is determined depending on at least the part of the environmental sensor data (10) or the modified environmental sensor data transmitted via the at least one data package, and virtual content (17, 18), which is determined depending on the at least one class assigned to the current scene.

16. Data processing system (2), which is configured to carry out a computer-implemented method according to one of the preceding claims.

17. Data processing system (2) according to claim 16, comprising
- a first data processing device (3), wherein the pre-computing module (5) is implemented in the first data processing device (3), and/or a second data processing device (4), wherein the application module (6) is implemented in the second data processing device (4); or
- a single data processing device, wherein the pre-computing module (5) and the application module (6) are implemented in the single data processing device.

18. Data processing system (2) according to claim 17, wherein the first data processing device (3) comprises an electronic control unit of the vehicle (1) or a vehicle computer of the vehicle (1) and/or the second data processing device (4) comprises a mobile electronic device.

19. Computer program product comprising instructions, which, when executed by a data processing system (2) cause the data processing system (2) to carry out a computer implemented method according to one of claims 1 to 15.
